(19) Europäisches Patentamt

European Patent Office

Office européen des brevets

(11) Publication number: **0 153 130 B1**

(12) **EUROPEAN PATENT SPECIFICATION**

(45) Date of publication of patent specification: **31.07.91**  (51) Int. Cl.⁵: **G01S 13/52**, G01S 13/528

(21) Application number: **85300912.4**

(22) Date of filing: **12.02.85**

(54) **Moving target indicator.**

(30) Priority: **14.02.84 JP 25513/84**

(43) Date of publication of application:
**28.08.85 Bulletin 85/35**

(45) Publication of the grant of the patent:
**31.07.91 Bulletin 91/31**

(84) Designated Contracting States:
**FR GB NL**

(56) References cited:
**US-A- 3 096 514**
**US-A- 3 962 704**
**US-A- 3 987 442**
**US-A- 4 137 533**

(73) Proprietor: **NEC CORPORATION**
**7-1, Shiba 5-chome Minato-ku**
**Tokyo 108-01(JP)**

(72) Inventor: **Togashi, Fusaji**
**c/o NEC Corporation 33-1 Shiba 5-chome**
**Minato-ku Tokyo(JP)**
Inventor: **Hagisawa, Toshihiko**
**c/o NEC Corporation 33-1 Shiba 5-chome**
**Minato-ku Tokyo(JP)**

(74) Representative: **Jackson, David Spence et al**
**REDDIE & GROSE 16, Theobalds Road**
**London, WC1X 8PL(GB)**

## Description

The present invention relates to a moving target indicator apparatus for a radar having at least one pulse repetition period different from the other pulse repetition periods and supplying amplitude and phase components of received signals including stationary and moving clutter, the apparatus being of the comprising: first clutter removing means for responding to the said radar and for removing the stationary clutter having a Doppler speed of nearly zero from the radar received signals and second clutter removing means connected to the first clutter removing means to remove moving clutter.

Conventionally, a pulse-radar system indicating a moving target such as an airplane is designed with clutter-canceler or suppressor means to remove stationary (ground) clutter originating from buildings or other surface irregularities and moving clutter, such as weather clutter originating from moving reflectors such as rain or cloud, and to detect and indicate the moving target. Among these clutter removing means, a moving target indicator system, hereinafter simply referred to as an MTI system, is often used for removing stationary clutter.

Generally, an MTI system adapted as a radar system for detecting and indicating aircraft is used to remove or cancel a signal originating from a stationary clutter source so as to indicate only a moving target. When the phases of transmitted R.F. pulses are compared with the phases of received R.F. pulses, the signal from a stationary clutter source always has a constant phase, whereas the signal from a move target always has different phase for each pulse repetition period. Hence, phase-detection is carried out in response to signals from the same distance for the two contiguous pulse-repetition periods and the difference between the video signals obtained is taken so as to cancel out the video signal originating from a stationary clutter source and to leave only the video signal corresponding to a moving target. This kind of MTI radar system is described in chapter 17, "RADAR HANDBOOK", McGraw-Hill, U.S.A., 1970.

However, an ordinary MTI system cannot cancel out moving clutter from rain, fog, the sea surface or the like or moving ground clutter from land or the like when radar is installed on a moving carrier such as a ship, because these signals have different phase for each pulse repetition period, similar to said signals from a moving target.

An adaptive MTI system is suitable for cancelling moving clutter including moving ground clutter of the kind mentioned, and for indicating only a moving target such as an airplane. Cancelling of an echo from a moving object can be accomplished by varying and transferring the Doppler frequency of the moving clutter to a notch of an MTI filter. A conventional adaptive MTI radar system of this kind is a clutter-locking MTI system described in the chapter 9, "RADAR DESIGN PRINCIPLES" McGraw-Hill, U.S.A., 1969.

A clutter-locking MTI system can remove moving clutter or stationary clutter by detecting an average Doppler frequency (or an average Doppler phase-shift) and locking the average Doppler frequency (or the average Doppler phase-shift) to a notch of the MTI filter. However, when stationary clutter and moving clutter are both present, the detected average Doppler frequency, or average Doppler phase-shift, is different from that of stationary clutter alone or of moving clutter alone. The input signals of the clutter-locking MTI canceler are then:

$$V_1 = E_1 \sin[2\pi fd_1 t + \emptyset_0] + E_2 \sin[2\pi fd_2 t + \emptyset_0]$$

$$V_2 = E_1 \sin[2\pi fd_1(t+T) + \emptyset_0] + E_2 \sin[2\pi fd_2(t+T) + \emptyset_0] \qquad (1)$$

where $V_1$ and $V_2$ denote an input signal (radar signal) at the received time point and that after a radar-received repetition time T, respectively. The first and second terms of the equation (1) denote stationary clutter components including the Doppler frequency $fd_1$ (in this case, $fd_1 = 0$) and moving clutter components including the Doppler frequency $fd_2$, respectively. $E_1$ and $E_2$ denote amplitude components of the stationary clutter and the moving one and $\emptyset_0$ denotes a phase defined on the basis of the existing location of clutter. Generally, $E_1 \neq E_2$ and $fd_1 \neq fd_2$.

When one input signal is phase-shifted by the presumptive value

$$\widetilde{\emptyset d} = 2\pi \widetilde{fd} T$$

of the average Doppler phase shift, the canceler output is;

$$\Delta V = 2E_1 \sin[\pi(fd_1-\widetilde{fd})T] \quad \cos[2\pi fd_1 t+\phi_0+\pi (fd_1-\widetilde{fd})T]$$

$$+2E_2 \sin[\pi(fd_2-\widetilde{fd})T] \quad \cos[2\pi fd_2 t+\phi_0+\pi(fd_2-\widetilde{fd})T]$$

where there exists the condition of $\widetilde{fd} = fd_1 \neq fd_2$ or $\widetilde{fd} = fd_2 \neq fd_1$. Thus, it is impossible to remove both stationary clutter and moving clutter.

US-A-3987442 describes a radar system in which in-phase and quadrature signals are produced for each one of a series of range sweeps, these signals are phase compared with a reference signal to produce a pair of signals, and this pair of signals is converted into a series of complex digital words. Each complex word corresponds to a different one of a number of range cells in each one of the series of sweeps. A portion of the series of complex words of one of the series of range sweeps is combined with a portion of the series of complex words of another one of the range sweeps to produce a series of correction complex words, each one of which is representative of the average Doppler velocity of returns at a different one of the range cells. Each one of the input complex words of one of the range of sweeps is modified with a correction complex word to produce a series of modified complex words. Each one of the modified complex words is combined with a different one of the input complex words of another one of the range sweeps to reject moving clutter returns and to pass moving target returns.

US-A-3962704 describes a moving target indicator apparatus of the kind defined hereinbefore at the beginning in which a first canceller stage is either locked to or tracks ground clutter and a second canceller stage independently cancels offset clutter such as weather or chaff clutter.

Specifically, the system described in US-A-3962704 enables cancellation of clutter offset at different doppler frequencies and comprises a first canceller stage for cancellation of clutter at a first frequency and a second clutter stage for cancellation of clutter such as weather or chaff with a substantial doppler frequency offset from the first frequency. The first canceller stage comprises an in-phase(I) unit and an in-quadrature (Q)digital MTI unit both of which may conventional and which develop I and Q first differences, followed by a conversion of these differences into a combined first difference designated as a quantity M and representing an angle times an amplitude multiplier. Supplied with the M signal, the second canceller stage develops a second difference signal which is then normalized to represent a pure angle term. The angle term is processed by the use of a computer to generate a second difference output signal with the offset weather or chaff clutter substantially cancelled. This shows that phase correction or compensation of a phase is carried out in accordance with a Doppler frequency.

According to the present invention, a moving target indicator apparatus of the kind defined hereinbefore at the beginning is characterised in that it further comprises correction means connected between first and second clutter removing means to keep the amplitude components and the phase components of the signal representing the moving clutter at the output of the first clutter removing means nearly constant in value, and in that the second clutter removing means are arranged to remove the signal representing the moving clutter with constant amplitude component and phase component from the output of the correction means.

The invention will now be described by way of example with reference to the accompanying drawings, in which:

Figs. 1A and 1B are vector diagrams of a radar receiving signal.

Figs. 2 to 4 are block diagrams of major components of a radar system each representing an embodiment of the present invention.

DETAILED DESCRIPTION OF THE PREFERRED EMBODIMENTS:

An embodiment of the present invention has two conventional MTI stationary clutter removing means i. e., MTI filters, connected in series and a corrector which corrects the phase and amplitude components of the output of a first stage MTI filter in order to detect a moving target in the region where both stationary clutter and moving clutter exist. Specifically, the system according to the present invention includes an MTI canceler for removing the stationary clutter, a clutter-locking MTI canceler for removing the moving clutter not removed by the MTI canceler, and correcting means to correct the amplitude and phase variation caused due to a staggered-trigger system. It is possible to remove moving clutter with the MTI system described above when the radar transmit repetition time is always a constant time T. In practice, however, a staggered PRF MTI (Staggered Pulse Repetition Frequency MTI) system is often employed to improve blind speed by varying radar transmit repetition time. This has the disadvantage that moving clutter cannot be removed because the clutter-locking MTI canceler receives the input signal with a different amplitude-shift and phase-shift due to the repetition time difference. For example, when $T_1$ and $T_2$ are employed as a radar transmit times, stationary clutter and moving clutter signals supplied to the MTI canceller are;

$$V_1 = E_1 \sin[2\pi fd_1 t + \phi_0] + E_2 \sin[2\pi fd_2 t + \phi_0]$$
$$V_2 = E_1 \sin[2\pi fd_1(t+T_1) + \phi_0] + E_2 \sin[2\pi fd_2(t+T_1) + \phi_0]$$
$$V_3 = E_1 \sin[2\pi fd_1 (t+T_1+T_2)+\phi_0] + E_2 \sin[2\pi fd_2(t+T_1+T_2)+\phi_0] \qquad (2)$$

The outputs of the MTI canceler are;

$$\Delta V_1$$
$$= V_2 - V_1$$
$$= 2E_1 \sin[\pi fd_1 T_1] \cos[2\pi fd_1 t + \phi_0 + \pi fd_1 T_1]$$
$$+ 2E_2 \sin[\pi fd_2 T_1] \cos[2\pi fd_2 t + \phi_0 + \pi fd_2 T_1]$$
$$\Delta V_2$$
$$= V_3 - V_2$$
$$= 2E_1 \sin[\pi fd_1 T_2] \cos[2\pi fd_1 t + \phi_0 + \pi fd_1 (2T_1+T_2)]$$
$$+ 2E_2 \sin[\pi fd_2 T_2] \cos[2\pi fd_2 t + \phi_0 + \pi fd_2(2T_1+T_2)] \qquad (3)$$

Stationary clutter ($fd_1 \simeq 0$) can be removed because $\sin[\pi fd_1 T_1] \approx 0$, $\sin[\pi fd_1 T_2] \approx 0$, however, moving clutter ($fd_2 \neq 0$) cannot be removed. Therefore, the outputs of the MTI canceler are represented as follows;

$$\Delta V_1 = 2E_2 \sin[\pi fd_2 T_1] \cos[2\pi fd_2 t + \phi_0 + \pi fd_2 T_1]$$
$$\Delta V_2 = 2E_2 \sin [\pi fd_2 T_2] \cos[2\pi fd_2 t + \phi_0 + \pi fd_2(2T_1+T_2)] \qquad (4)$$

Similarly as stated before, one input signal is phase-shifted by the presumptive value of

$$\tilde{\phi}d = 2\pi \tilde{f}d \left(\frac{T_1+T_2}{2}\right)$$

of the average Doppler phase-shift of the moving clutter (this input signal is shown as $V_2'$) and is passed through the clutter-locking MTI canceller. The output $\Delta W$ of the clutter-locking MTI is shown:

$$\Delta W = \Delta V_2' - \Delta V_1$$

$$= 2E_2 \sin[\pi fd_2 T_2] \cos[2\pi fd_2 t + \phi_0 + \pi fd_2 (2T_1+T_2) - \tilde{\phi}_d]$$

$$- 2E_2 \sin[\pi fd_2 T_1] \cos[2\pi fd_2 t + \phi_0 + \pi fd_2 T_1]$$

$$= 2E_2 \sin[\pi fd_2 T_2] \cos[2\pi fd_2 t + \phi_0 + \pi fd_2 T_1 + \pi(fd_2 - \tilde{f}d)(T_1+T_2)]$$

$$- 2E_2 \sin[\pi fd_2 T_1] \cos[2\pi fd_2 t + \phi_0 + \pi fd_2 T_1]$$

$$\cdots \quad (5)$$

Even when $\tilde{f}d = fd_2 \neq fd_1$. Thus, it is $\approx fd_2$

$$\triangle W = 2E_2 (\sin[\pi fd_2 T_2] - \sin[\pi fd_2 T_1]) \cos[2\pi fd_2 t + \phi_0 + \pi fd_2 T_1]$$

$$= 4E_2 \sin[\pi fd_2 (\frac{T_2 - T_1}{2})] \cos[\pi fd_2 (\frac{T_1 + T_1}{2})].$$

$$\cos[2\pi fd_2 t + \phi_0 + \pi fd_2 T_1]$$

$$\dots \quad (6)$$

Hence, moving clutter cannot be removed. In the case that the radar transmit repetition time is constant as $T_1 = T_2 (=T)$, it is obvious from the equation (6) that moving clutter can be removed because

$$\sin[\pi fd_2 (\frac{T_2 - T_1}{2})] = 0.$$

The description stated above can also be applied to a vector processing MTI including an I (in-phase) channel and a Q (quadrature) channel.

As described above, in the staggered PRF MTI system, both the amplitude and the phase of the moving clutter in the output of the MTI canceler are varied with the Doppler frequency response characteristics. Thus, it has been hitherto impossible to remove moving clutter with a clutter-locking MTI.

The present invention is designed to remove moving clutter by correcting the moving clutter having amplitude-shift and phase-shift varied as stated above and supplying the corrected signal to the clutter-locking MTI canceler.

Hereinafter, it is described how amplitude-shift and phase-shift to be corrected should be determined by giving an example of a triple staggered-trigger mode where the trigger repetition times are $T_1$, $T_2$, $T_3$.

In a radar signal passed through an MTI canceler (stationary clutter canceler), stationary clutter is removed leaving only moving clutter components. As stated before, the amplitudes and the phases of these clutter components vary in every staggered-trigger repetition by virtue of the Doppler frequency response characteristics of the stationary clutter canceler.

The following are the amplitude components $A_{n+1}$, $A_{n+2}$, $A_{n+3}$, $A_{n+4}$ ... (n; natural and positive integer) in every transmit trigger state (n+1), (n+2), (n+3) ... as shown in formula (4).

$$A_{n+1} = 2E_2 \sin(\pi fd_2 T_1)$$
$$A_{n+2} = 2E_2 \sin(\pi fd_2 T_2)$$
$$A_{n+3} = 2E_2 \sin(\pi fd_2 T_3)$$
$$A_{n+4} = 2E_2 \sin(\pi fd_2 T_1) \quad (7)$$

The phase-shift components $\Delta\theta_{n+2}, \Delta\theta_{n+3}, \Delta\theta_{n+4}, \Delta\theta_{n+5}$ ... are changed as follows;

$$\Delta\theta_{n+2} = \pi fd_2 (T_1 + T_2)$$
$$\Delta\theta_{n+3} = \pi fd_2 (T_2 + T_3)$$
$$\Delta\theta_{n+4} = \pi fd_2 (T_3 + T_1)$$
$$\Delta\theta_{n+5} = \pi fd_2 (T_1 + T_2) \quad (8)$$

Thus, in the trigger state (n+1),

the I channel stationary clutter canceler output is

$$A_{n+1} \cos\theta_{n+1}$$

and the Q channel stationary clutter canceler output is $\Bigg\} \cdot (9)$

$$A_{n+1} \sin\theta_{n+1}$$

where
$$\theta_{n+1} = 2\pi f d_2 t + \phi_0 + \pi f d_2 T_1 + \frac{\pi}{2}$$

The amplitude- and the phase-shift components of the I and Q outputs obtained are corrected so as to have constant values without depending on the stagger-trigger time.

It is assumed that reference amplitude and phase values are given as $A_0$ and $\theta_0$, respectively, and $B_{n+1}$ and $\theta_{n+1}$ are given below:

$$\left. \begin{array}{l} B_{n+1} = \dfrac{A_0}{\sin(\pi f d_2 T_1)} = \dfrac{2E_2 A_0}{A_{n+1}} \\[3mm] \Delta\theta_{n+1} = \theta_{n+1} - \theta_0 \end{array} \right\} \quad \cdots \quad (10)$$

The I channel components are expressed as;

$$A_{n+1} B_{n+1} [\cos\theta_{n+1} \cdot \cos\theta_{n+1} + \sin\theta_{n+1} \cdot \sin\theta_{n+1}]$$

$$= A_{n+1} B_{n+1} \cos[\theta_{n+1} - \Delta\theta_{n+1}]$$

And the Q channel components are expressed as;

$$A_{n+1} B_{n+1} [\sin\theta_{n+1} \cdot \cos\theta_{n+1} - \cos\theta_{n+1} \cdot \sin\theta_{n+1}]$$

$$= A_{n+1} B_{n+1} \sin[\theta_{n+1} - \Delta\theta_{n+1}]$$

$\qquad \cdots \quad (11)$

Thus, these components are respectively made to be constant value, i.e., $2E_2 A_0 \cos\theta_0$ and $2E_2 A_0 \sin\theta_0$. In other words, the amplitude and phase components are independent of the difference of the Doppler shift $f d_2$ of the moving clutter and the trigger period.

In the next trigger state $(n+2)$,

$$B_{n+2} = \frac{A_0}{\sin(\pi f d_2 T_2)} = \frac{2E_2 A_0}{A_{n+2}}$$

and

$$\Delta\theta_{n+1} = \theta_{n+1} - \theta_0$$

$$\Delta\theta_{n+2} = \theta_{n+2} - \theta_{n+1} \qquad \qquad \cdots \quad (12)$$

are given, and the following corrections similarly that with in the previous trigger state are carried out for the I and Q components.

I components;

$$A_{n+2}B_{n+2}[\cos\theta_{n+2}\cdot\cos(\Delta\theta_{n+1}+\Delta\theta_{n+2})+\sin\theta_{n+2}\cdot$$

$$\sin(\Delta\theta_{n+1}+\Delta\theta_{n+2})]$$

$$= A_{n+2}B_{n+2}\cos[\theta_{n+2}-(\Delta\theta_{n+1}+\Delta\theta_{n+2})]$$

Q components;

$$A_{n+2}B_{n+2}[\sin\theta_{n+2}\cdot\cos(\Delta\theta_{n+1}+\Delta\theta_{n+2})-\cos\theta_{n+2}\cdot$$

$$\sin(\Delta\theta_{n+1}+\Delta\theta_{n+2})]$$

$$= A_{n+2}B_{n+2}\sin[\theta_{n+2}-(\Delta\theta_{n+1}+\Delta\theta_{n+2})]$$

$$\cdots \quad (13)$$

In consideration of equations (12), (13), the following components independent of $fd_2$ and the trigger time are obtained.

I components: $2E_2 A_0 \cos\theta_0$

Q ccmponents: $2E_2 A_0 \sin\theta_0$

Generally, for amplitude and phase correction in the trigger stage $(n+m)$, if

$$B_{n+m} = \frac{A_0}{\sin(\pi f d_2 Tj)} = \frac{2E_2 A_0}{A_{n+m}}$$

$$Tj = T_1; \quad m = 1, 4, 7, \ldots$$

$$Tj = T_2; \quad m = 2, 5, 8, \ldots$$

$$Tj = T_3; \quad m = 3, 6, 9, \ldots$$

$$\cdots \quad (14)$$

are assumed, the following corrections are required:

for the I components,

$$A_{n+m}B_{n+m}[\cos\theta_{n+m}\cdot\cos(\sum_{i=1}^{m}\Delta\theta_{n+i})+\sin\theta_{n+m}\cdot\sin(\sum_{i=1}^{m}\Delta\theta_{n+i})]$$

$$\simeq A_{n+m}B_{n+m}[\cos\theta_{n+m}-(\sum_{i=1}^{m}\Delta\theta_{n+i})]$$

for the Q components,

$$A_{n+m}B_{n+m}[\sin\theta_{n+m}\cdot\cos(\sum_{i=1}^{m}\Delta\theta_{n+i})-\cos\theta_{n+m}\cdot\sin(\sum_{i=1}^{m}\Delta\theta_{n+i})]$$

$$\simeq A_{n+m}B_{n+m}\sin[\theta_{n+m}-(\sum_{i=1}^{m}\Delta\theta_{n+i})]$$

$$\cdots (15)$$

As a result, both components will be expressed as;

I components: $2E_2A_0\cos\theta_0$

Q components: $2E_2A_0\sin\theta_0$

These components can be regarded as stationary clutter. Since the Doppler frequency $fd_2$ of the moving clutter is unknown, the presumptive value $\tilde{f}d$ thereof is utilized as the corrected signal. This corrected component signals are made to pass through the clutter-locking MTI canceler to remove moving clutter.

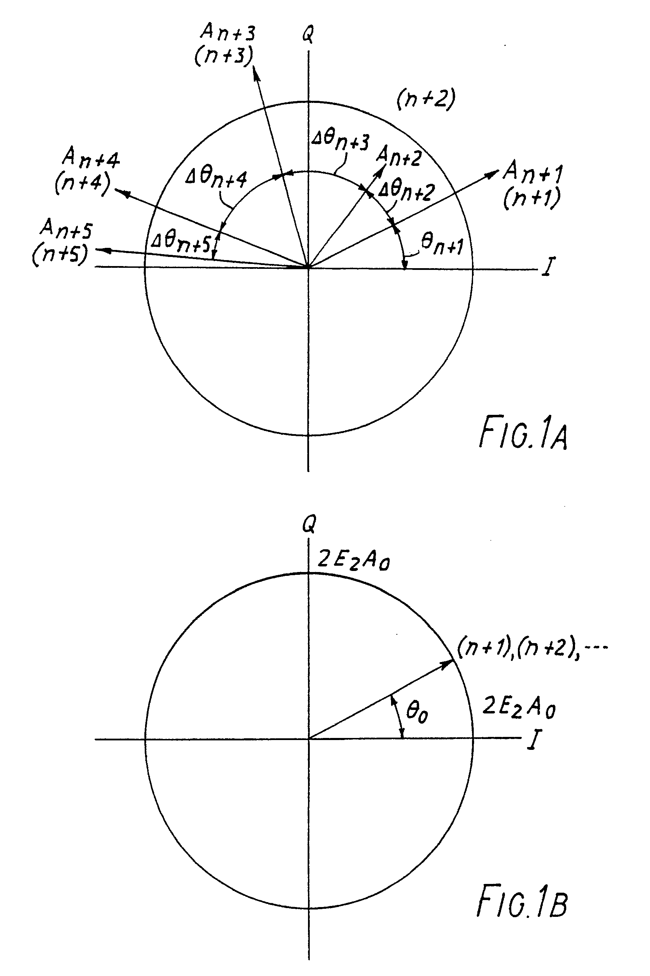

Fig. 1 is a vector diagram showing the above-stated relationship. In Fig. 1A, $A_{n+1}$, $A_{n+2}$, $A_{n+3}$, $A_{n+4}$, $A_{n+5}$ denote the signal amplitudes in the trigger states $(n+1)$, $(n+2)$, $(n+3)$, $(n+4)$, $(n+5)$, respectively, and $\Delta\theta_{n+2}$, $\Delta\theta_{n+3}$, $\Delta\theta_{n+4}$, $\Delta\theta_{n+5}$, the phase-shifts from the signals in the respective previous trigger states for the trigger states $(n+2)$, $(n+3)$, $(n+4)$, $(n+5)$, respectively. As described above, shifting the phases of the states $(n+1)$, $(n+2)$, $(n+3)$ and $(n+4)$ by $\Delta\theta_{n+1}$, $\Delta\theta_{n+1} + \Delta\theta_{n+2}$, $\Delta\theta_{n+1}+\Delta\theta_{n+2} +\Delta\theta_{n+3}$, $\Delta\theta_{n+1} +\Delta\theta_{n+2} +\Delta\theta_{n+3} + \Delta\theta_{n+4}$ makes signals with the stationary phase $\theta_0$. The varying amplitudes in every trigger state can also be made constant by correcting with $B_{n+m}$ in equation (14). Thus, correction on the basis of equation (15) is accomplished in the present invention. Fig. 1B shows a vector diagram of the signals obtained through the frequency correction. In each state, the amplitudes and the phases of the signals are made to be constant values $2E_2A_0$ and $\theta_0$.

An embodiment of the present invention will now be described to illustrate the principle of this invention.

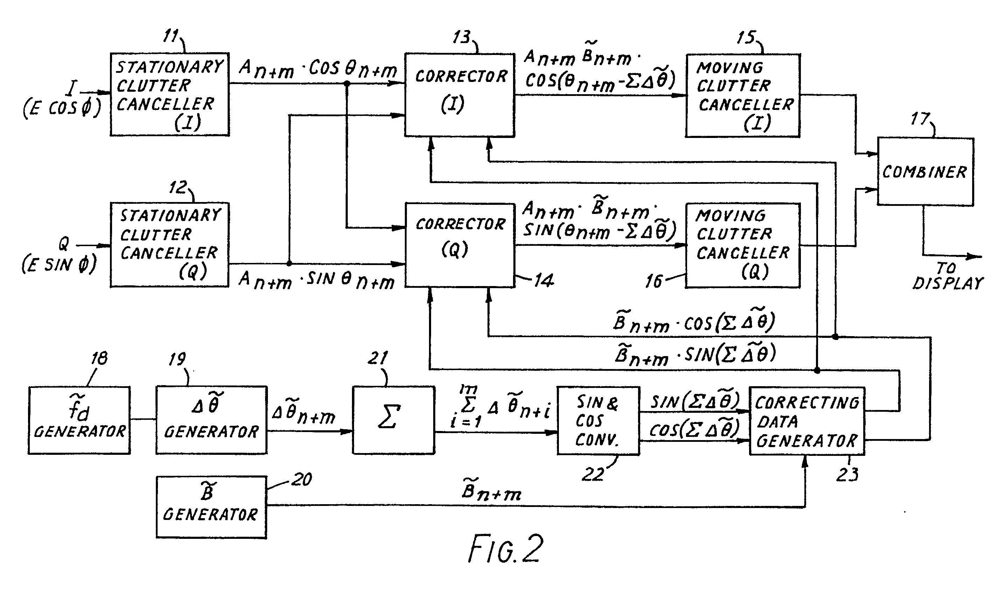

In fig. 2, stationary clutter cancelers 11 and 12, composed of the well-known delay circuit and subtractor circuit, remove stationary clutter from the signals $I_{in}$ (I component given as $E\cos\phi$) and $Q_{in}$ (Q component given as $E\sin\phi$). The I component signal and the Q component signal from which stationary clutter is removed are expressed as $A_{n+m}\cos\cdot\theta_{n+m}$ and $A_{n+m}\cdot\sin\theta_{n+m}$, respectively.

Amplitude and phase correctors 13 and 14 correct the input signal on the basis of equation (15) to obtain a signal with constant amplitude and phase and supplies the corrected signal to the moving clutter cancelers 15 and 16. The moving clutter cancelers 15 and 16, comprising the same circuit as the stationary clutter cancelers 11 and 12, remove the corrected moving clutter. Then, the I and Q component signals from which the stationary clutter and the moving clutter have been removed are combined in a I/Q combiner 17 and the combined signal is output to a display (not shown) as an indication video signal.

A phase-correcting data generator 19 generates a phase-variation signal $\Delta\tilde{\theta}_{n+m}$ in each trigger repetition due to the differences of the trigger repetition periods, corresponding to the average Doppler frequency $\tilde{f}d$ related to moving clutter velocity. An amplitude-correcting data generator 20 similarly generates a correction signal $\tilde{B}_{n+m}$ to normalize the amplitude varied in every trigger repetition at a predetermined value. An integrator 21 integrates the phase-variation $\Delta\tilde{\theta}_{n+m}$ in every trigger repetition which is output from the phase-correcting data generator 19 and outputs

$$\sum_{i=1}^{m} \Delta \tilde{\theta}_{n+i}$$

of equation (15). A SIN&COS converter 22 generates $SIN(\Sigma\Delta\tilde{\theta})$ and $COS(\Sigma\Delta\tilde{\theta})$ in response to the integrating data

$$\Sigma\Delta\tilde{\theta} (\equiv \sum_{i=1}^{m} \Delta \tilde{\theta}_{n+i}).$$

A correcting data generator 23 transmits correcting data $\tilde{B}_{n+m}\cdot sin(\Sigma\Delta\tilde{\theta})$ and $\tilde{B}_{n+m}\cdot cos(\Sigma\Delta\tilde{\theta})$ to the amplitude and phase correctors 13 and 14 in response to the outputs from the amplitude-correcting data generator 20 and the SIN&COS converter 22.

There will now be described an example of manually setting a presumptive value $\tilde{f}d$ of the average Doppler frequency $(fd_2)$ of the moving clutter. For example, a radar operator watches a video indicator displaying the output of the I/Q combiner on the radar screen and arranges the output from a presumptive Doppler frequency ($\tilde{f}d$) generator 18 to reduce clutter on the screen as much possible. $\tilde{f}d$ from the $\tilde{f}d$ generator 18 is fixed at a suitable frequency minimizing clutter on the screen.

The phase-correcting data generator 19 equalizes a reference phase value $\theta_0$ with $\theta_{n+1}$ for the phase variation (presumptive value) $\Delta\tilde{\theta}_{n+1}$ in the trigger state $(n+1)$ and generates phase variation starting from $\Delta\tilde{\theta}_{n+1} = \theta_{n+1} - \theta_0 = 0$. Using the well-known data $\tilde{f}d$, $T_1$, $T_2$, $T_3$, the generator 19 generates the following variations (presumptive values):

$$
\begin{aligned}
&\text{in the trigger state } (n+2); \\[4pt]
&\qquad \Delta\tilde{\theta}_{n+2} = \pi\tilde{f}d(T_1+T_2) \; [\fallingdotseq \theta_{n+2} - \theta_{n+1}] \\[10pt]
&\text{in the trigger state } (n+3); \\[4pt]
&\qquad \Delta\tilde{\theta}_{n+3} = \pi\tilde{f}d(T_2+T_3) \; [\fallingdotseq \theta_{n+3} - \theta_{n+2}] \quad \cdots \quad (16) \\[10pt]
&\text{in the trigger state } (n+4); \\[4pt]
&\qquad \Delta\tilde{\theta}_{n+4} = \pi\tilde{f}d(T_3+T_1) \; [\fallingdotseq \theta_{n+4} - \theta_{n+3}]
\end{aligned}
$$

The amplitude-correcting data generator 20 generates the following data to correct the amplitude variation in each state.

The amplitude-correcting value (presumptive value) $\tilde{B}_{n=1}$ in the trigger state $(n+1)$ is;

$$\tilde{B}_{n+1} = \frac{A_0}{\sin(\pi \tilde{f}dT_1)} \left[\simeq \frac{A_0}{\sin(\pi fd_2 T_1)}\right]$$

in the trigger state (n+2);

$$\tilde{B}_{n+2} = \frac{A_0}{\sin(\pi \tilde{f}dT_2)} \left[\simeq \frac{A_0}{\sin(\pi fd_2 T_2)}\right]$$

in the trigger state (n+3),

$$\tilde{B}_{n+3} = \frac{A_0}{\sin(\pi \tilde{f}dT_3)} \left[\simeq \frac{A_0}{\sin(\pi fd_2 T_3)}\right] \qquad \dots \quad (17)$$

in the trigger state (n+4),

$$\tilde{B}_{n+4} = \frac{A_0}{\sin(\pi \tilde{f}dT_1)} \left[\simeq \frac{A_0}{\sin(\pi fd_2 T_1)}\right]$$

As is clear from the equations (15) to (17), the amplitude and phase correctors 13 and 14 give the moving clutter signal with constant amplitude and phase through processing for the amplitude component:

$$A_{n+m} \cdot \tilde{B}_{n+m} = 2E_2 \sin(\pi fd_2 Tj) \frac{A_0}{\sin(\pi \tilde{f}dTj)}$$

$$\simeq 2E_2 A_0.$$

and through the processing for the phase component:

$$\cos\theta_{n+m} \cdot \cos(\Sigma \Delta \tilde{\theta}) + \sin\theta_{n+m} \cdot \sin(\Sigma \Delta \tilde{\theta}) = \cos(\theta_{n+m} - \Sigma \Delta \tilde{\theta})$$

$$= \cos(\theta_{n+m} - \Sigma \Delta \theta)$$

$$= \cos\theta_0$$

$$\sin\theta_{n+m} \cdot \cos(\Sigma \Delta \tilde{\theta}) - \cos\theta_{n+m} \cdot \sin(\Sigma \Delta \tilde{\theta}) = \sin(\theta_{n+m} - \Sigma \Delta \tilde{\theta})$$

$$\simeq \sin(\theta_{n+m} - \Sigma \Delta \theta)$$

$$= \sin\theta_0$$

The embodiment shown in Fig. 2 discloses an example of generating amplitude and phase correction data through a manual operation. However, it is possible to automatically generate the correction data.

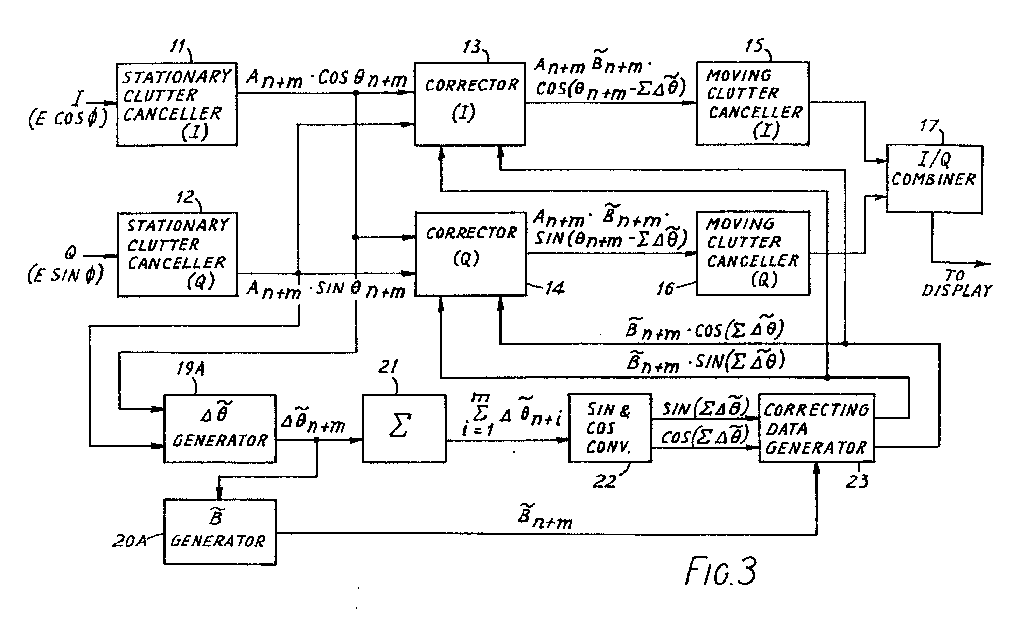

Fig. 3 shows the embodiment where the correction data is generated on the basis of a presumptive value $\tilde{\Theta}_{n+m}$ of the average Doppler phase-shift of the moving clutter determined by the outputs of stationary clutter cancelers 11 and 12. In Fig. 3, the same numerals as in Fig. 2 denote the same constituent elements therewith. Only the difference between the embodiments shown in Figs. 2 and 3 will be described. A phase-correcting data generator 19A determines the phase-shift $\Delta\theta_{n+m}$ by utilizing the I and Q component signals of the outputs of the cancelers 11, 12 in the trigger states $(n+m)$ and $(n+m-1)$ according to the following equation.

$$\Delta\theta_{n+m} = \theta_{n+m} - \theta_{n+m-1}$$

$$= \tan^{-1}\left[\frac{A_{n+m}\cdot\sin\theta_{n+m}}{A_{n+m}\cdot\cos\theta_{n+m}}\right] - \tan^{-1}\left[\frac{A_{n+m-1}\cdot\sin\theta_{n+m-1}}{A_{n+m-1}\cdot\cos\theta_{n+m-1}}\right]$$

$$\ldots \quad (18)$$

Next, the presumptive value $\Delta\tilde{\Theta}_{n+m}$ $(\approx\Delta\theta_{n+m})$ for the average Doppler phase-shift of the moving clutter at the distance $R_0$ to be observed is given as:

$$\Delta\tilde{\theta}_{n+m} = \frac{1}{N}\sum_{r=-\frac{N}{2}}^{N}[\Delta\theta_{(n+m)}]_{R_0+r} \quad\quad \ldots \quad (19)$$

$$r \neq 0$$

Herein, the average of N samples of the moving clutter phase-shift between the distance $(R_0 - \frac{N}{2})$ and $(R_0 + \frac{N}{2})$ in the transmit trigger state $(n+m)$, except the distance $R_0$, is regarded as the presumptive value of the average Doppler phase-shift of the moving clutter. The same processing with the embodiment shown in Fig. 2 is carried out to obtain an integrated value, SIN component and COS component from the obtained presumptive value $\Delta\tilde{\Theta}_{n+m}$.

An amplitude-correcting data generator 20A determines

$$\tilde{B}_{n+m} = \frac{A_0}{\sin(\Delta\tilde{\theta}_{n+m}\frac{T_j}{T_{j-1}+T_j})}$$

$$= \frac{A_0}{\sin(\pi\tilde{f}dT_j)}$$

according to $\Delta\tilde{\Theta}_{n+m} = \pi\tilde{f}d(T_{j-1} + T_j)$ in response to $\Delta\tilde{\Theta}_{n+m}$ obtained in the phase-correcting data generator 19A, and then supplies it to a correcting data generator 23.

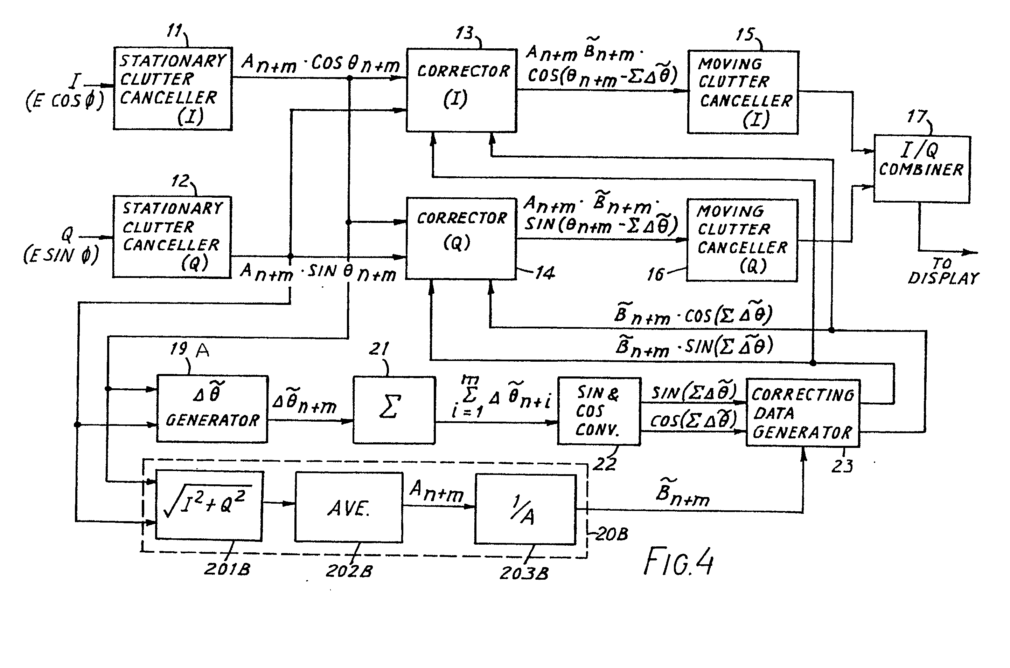

Fig. 4 is a block diagram of another embodiment for generating correction data. In this embodiment, the phase-correcting data generator 19A is identical with that of the embodiment shown in Fig. 3, however, the amplitude-correcting data generating method is different from that in Fig. 3.

An amplitude-correcting data generator 20B is composed of an amplitude calculator 201B, an averaging circuit 202B and a reciprocal number calculating circuit 203B. The amplitude calculator 201B develops

$$\sqrt{(A_{n+m}\cos\theta_{n+m})^2 + (A_{n+m}\sin\theta_{n+m})^2}$$

on receipt of the I components $(A_{n+m}\cdot\cos\theta_{n+m})$ and Q components $(A_{n+m}\cdot\sin\theta_{n+m})$ and thus outputs amplitude components. The averaging circuit 202B develops the average amplitude value $\overline{A}_{n+m}$ $(\simeq A_{n+m})$ on receipt of those amplitude components according to the equation;

$$\overline{A}_{n+m} = \frac{1}{N} \sum_{r=-\frac{N}{2}}^{\frac{N}{2}} \left[ \sqrt{(A_{n+m}\cos\theta_{n+m})^2 + (A_{n+m}\sin\theta_{n+m})^2} \right]_{R_0 + r}$$

$$r \neq 0$$

Next, the reciprocal number calculator 203B obtains as the output of the amplitude-correcting data generator 20B the reciprocal number of $\overline{A}_{n+m}$ or

$$\tilde{B}_{n+m} = \frac{A_0}{\overline{A}_{n+m}}$$

and then to supplies it to the correcting data generator 23.

When the outputs of the cancelers 11 and 12 are corrected according to the correction data obtained as stated above, the phase components and the amplitude components are kept constant so that moving clutter is removed by the moving clutter cancelers 15 and 16.

## Claims

1. A moving target indicator apparatus for a radar having at least one pulse repetition period different from the other pulse repetition periods and supplying the amplitude and phase components of received signals including stationary and moving clutter, the apparatus comprising: first clutter removing means (11, 12) for responding to the said radar and for removing the stationary clutter having a Doppler speed of nearly zero from the radar received signals and second clutter removing means (15, 16) connected to the first clutter removing means to remove moving clutter, the apparatus being characterised in that it further comprises correction means (13, 14) connected between the first and second clutter removing means to keep the amplitude components and the phase components of the signal representing the moving clutter at the output of the first clutter removing means (11, 12) nearly constant in value, and in that the second clutter removing means (15, 16) are arranged to remove the signal representing the moving clutter with constant amplitude component and phase component from the output of the correction means (13, 14).

2. Indicator apparatus according to claim 1, characterised in that the first clutter removing means (11, 12), the correction means (13, 14) and the second clutter removing means (15, 16) respectively include processing means for the in-phase (I) component and the quadrature (Q) component of the radar received signals.

3. Indicator apparatus according to claim 2, characterised by combination means (17) for combining the in-phase component (I) and the quadrature component (Q) obtained at the outputs of the second clutter removing means (15, 16).

4. Indicator apparatus according to claim 1, characterised in that the correction means comprise: a phase correcting data generator (19) for generating a phase variation signal $\Delta\tilde{\theta}$ in each repetition period of the radar in accordance with an average Doppler frequency $\tilde{f}d$ related to the velocity of the moving clutter, an amplitude-corrects data generator (20) for generating an amplitude-correcting data signal $\tilde{B}$ for correcting an amplitude variation in each repetition period, and means for integrating (21) the phase variation signal $\Delta\tilde{\theta}$ and outputting the integrated value signal $\Sigma\Delta\tilde{\theta}$ as a reference data signal for phase correction in each repetition period.

5. Indicator apparatus according to claim 2, characterised in that the correction means comprise: a phase correcting data generator (19) for generating a phase variation signal $\Delta\tilde{\theta}$ in each repetition period of the radar in accord with an average Doppler frequency $\tilde{f}d$ related to the speed of the moving clutter, an amplitude-correcting data generator (20) for generating an amplitude-correcting data signal $\tilde{B}$ for correcting the amplitude variation in each said repetition period, integrator means (21) for integrating the phase variation signal $\Delta\tilde{\theta}$ and generating the integrated value signal $\Sigma\Delta\tilde{\theta}$ SIN&COS converter means (22) for generating the sin component and cos component of the integrated value signal $\Sigma\Delta\tilde{\theta}$, and a correcting data generator (23) which receives the outputs of the SIN&COS converter means (22) and of the amplitude correction data generator (20) in each repetition period and generates correction data.

6. Indicator apparatus according to claim 4, characterised by a presumptive Doppler frequency generator (18) for generating and supplying a presumptive Doppler frequency signal $\tilde{f}d$ corresponding to the moving clutter within a predetermined range to the phase-correcting data generator (19) and for enabling the Doppler frequency to fix at an approximate value.

7. Indicator apparatus according to claim 6, characterised in that the output of the presumptive Doppler frequency generator is connected to the input of the amplitude-correcting data generator (20B).

8. Indicator apparatus according to claim 4 or 5, characterised in that the correction means includes, as said amplitude-correcting data generator, means (20A) for generating

$$\tilde{B} = \frac{A_0}{\sin(\pi\,\tilde{f}_d\,T_j)}$$

where $\tilde{f}d$ denotes an average Doppler frequency of the moving clutter and $T_j$ denotes the present pulse repetition period.

9. Indicator apparatus according to claim 1, characterised in that the correction means includes means (19A) for determining a phase-difference (phase-shift) signal between a repetition period and the repetition period just prior thereto, determining an average value of the obtained plurality of phase-shifts as an average Doppler phase-shift signal $\Delta\tilde{\theta}$, and generating the average value as a correction data reference in order to correct the said phase components.

10. Indicator apparatus according to claim 9, characterised in that the correction means includes means (20A) for generating amplitude-correcting data signal to correct the said amplitude corresponding to the said average Doppler phase-shift signal $\Delta\tilde{\theta}$.

11. Indicator apparatus according to claim 4 or 5, characterised in that the correction means comprise: means (201B) for determining the output amplitude components of said first clutter removing means (11, 12), means (202B) for determining an average amplitude value $\overline{A}$ of the determined amplitude components, and means (203B) for generating a reciprocal of this average value $A_0/\overline{A}$ as the data signal $\tilde{B}$, where $A_0$ denotes a reference amplitude value.

**Revendications**

1. Dispositif indicateur de cible mobile pour un radar comportant au moins une période de répétition

EP 0 153 130 B1

d'impulsions différente des autres périodes de répétition des impulsions et fournissant les composantes d'amplitude et de phase des signaux reçus comprenant des fouillis d'échos fixe et mobile, le dispositif comportant : des premiers moyens d'enlèvement de fouillis d'échos (11, 12) pour répondre audit radar et pour enlever des signaux reçus du radar le fouillis d'échos fixe ayant une vitesse Doppler voisine de zéro, et des seconds moyens d'enlèvement de fouillis d'échos (15, 16) connecté aux premiers moyens d'enlèvement de fouillis d'échos pour éliminer le fouillis d'échos mobile, le dispositif étant caractérisé en ce qu'il comporte en outre des moyens de correction (13, 14) montés entre les premiers et seconds moyens d'enlèvement de fouillis d'échos pour maintenir les composantes d'amplitude et les composantes de phase du signal représentant le fouillis d'échos mobile à la sortie des premiers moyens d'enlèvement de fouillis d'échos (11, 12) à une valeur presque constante, et en ce que les seconds moyens d'enlèvement de fouillis d'échos (15, 16) sont agencés pour enlever le signal représentant le fouillis d'échos mobile avec une composante d'amplitude et une composante de phase constantes à partir de la sortie du moyen de correction (13, 14).

2.  Dispositif indicateur selon la revendication 1, caractérisé en ce que les premiers moyens d'enlèvement de fouillis d'échos (11, 12), le moyen de correction (13, 14) et les seconds moyens d'enlèvement de fouillis d'échos (15, 16) comprennent respectivement, un moyen de traitement pour la composante en phase (I) et la composante en quadrature (Q) des signaux reçus du radar.

3.  Dispositif indicateur selon la revendication 2, caractérisé par un moyen de combinaison (17) pour combiner la composante en phase (I) et la composante en quadrature (Q) obtenues aux sorties des seconds moyens d'enlèvement de fouillis d'échos (15, 16).

4.  Dispositif indicateur selon la revendication 1, caractérisé en ce que les moyens de correction comprennent : un générateur (19) de données de correction de phase pour produire un signal de variation de phase $\Delta\widetilde{\Theta}$dans chaque période de répétition du radar en conformité avec une fréquence Doppler moyenne $\widetilde{f}d$ liée à la vitesse du fouillis d'échos mobile, un générateur (20) de données de correction d'amplitude pour produire un signal $\widetilde{B}$ de donnée de correction d'amplitude afin de corriger une variation d'amplitude dans chaque période de répétition, et un moyen pour intégrer (21) le signal de variation de phase $\Delta\widetilde{\Theta}$et sortir le signal de valeur intégrée $\Sigma\Delta\widetilde{\Theta}$comme signal de donnée de référence pour la correction de phase dans chaque période de répétition.

5.  Dispositif indicateur selon la revendication 2, caractérisé en ce que les moyens de correction comprennent: un générateur (19) de donnés de correction de phase afin de produire un signal de variation de phase $\Delta\widetilde{\Theta}$dans chaque période de répétition du radar en accord avec une fréquence Doppler moyenne $\widetilde{f}d$ liée à la vitesse du fouillis d'échos mobile, un générateur (20) de données de correction d'amplitude pour produire un signal $\widetilde{B}$de donnée de correction d'amplitude afin de corriger la variation d'amplitude dans chaque période de répétition, un moyen d'intégrateur (21) pour intégrer le signal de variation de phase $\Delta\widetilde{\Theta}$ et pour produire le signal de valeur intégrée $\Sigma\Delta\widetilde{\Theta}$un moyen de convertisseur SIN&COS (22) pour produire la composante sin et la composante cos du signal de valeur intégrée $\Sigma\Delta\widetilde{\Theta}$, et un générateur (23) pour de données de correction qui reçoit les sorties du moyen de convertisseur SIN&COS (22) et du générateur (20) de données de correction d'amplitude dans chaque période de répétition et produit la donnée de correction.

6.  Dispositif indicateur selon la revendication 4, caractérisé par un générateur (18) de fréquence de Doppler présumée pour générer et fournir un signal de fréquence Doppler présumée $\widetilde{f}d$ correspondant au fouillis d'échos mobile à l'intérieur d'une plage déterminée au générateur (19) de données de correction de phase et pour valider la fréquence Doppler afin de la fixer à une valeur approximative.

7.  Dispositif indicateur selon la revendication 6, caractérisé en ce que la sortie du générateur de fréquence Doppler présumée est reliée à l'entrée du générateur (20B) de données de correction d'amplitude.

8.  Dispositif indicateur selon la revendication 4 ou 5, caractérisé en ce que le moyen de correction comprend, comme dit générateur de correction d'amplitude, un moyen (20A) pour générer :

14

$$\tilde{B} = \frac{A_0}{\sin(\pi\,\tilde{f}_d\,T_j)}$$

où $\tilde{f}d$ représente une fréquence Doppler moyenne du fouillis d'échos mobile et $T_j$ représente la période présente de répétition des impulsions.

9. Dispositif indicateur selon la revendication 1, caractérisé en ce que le moyen de correction comprend un moyen (19A) pour déterminer un signal de différence de phase (déphasage) entre une période de répétition et la période de répétition juste précédente, pour déterminer une valeur moyenne de la multitude obtenue de déphasages comme signal de déphasage Doppler moyen $\Delta\tilde{\Theta}$, et pour produire la valeur moyenne comme référence de donnée de correction de manière à corriger lesdites composantes de phase.

10. Dispositif indicateur selon la revendication 9, caractérisé en ce que le moyen de correction comprend un moyen (20A) pour générer un signal de donnée de correction d'amplitude afin de corriger ladite amplitude correspondant audit signal de déphasage Doppler moyen $\Delta\tilde{\Theta}$.

11. Dispositif indicateur selon la revendication 4 ou 5, caractérisé en ce que le moyen de correction comprend : un moyen (201B) pour déterminer les composantes d'amplitude de sortie desdits premiers moyens d'enlèvement de fouillis d'échos (11, 12), un moyen (202B) pour déterminer une valeur moyenne d'amplitude $\overline{A}$, des composantes de l'amplitude déterminée, et un moyen (203B) pour générer la réciproque de cette valeur moyenne $A_0/\overline{A}$ comme le signal de donnée $\tilde{B}$, où $A_0$ représente une valeur d'amplitude de référence.

## Patentansprüche

1. Anordnung zur Anzeige bewegter Ziele für ein Radargerät, die mindestens eine Impulswiederholperiode aufweist, die sich von den anderen Impulswiederholperioden unterscheidet, und die die Amplituden- und Phasenkomponenten der empfangenen Signale einschließlich stationärer und sich bewegender Störungen weitergibt, wobei die Anordnung folgende Bestandteile aufweist: eine erste Störunterdrükkungseinheit (11, 12), die auf das Radargerät anspricht und die die stationäre Störung mit einer Doppler-Geschwindigkeit von nahezu null aus den vom Radargerät empfangenen Signalen unterdrückt, und einer zweiten Störunterdrückungseinheit (15, 16), die zum Unterdrücken sich bewegender Störungen mit der ersten Störunterdrückungseinheit verbunden ist, gekennzeichnet durch eine Korrektureinheit (13, 14), die zwischen der ersten und der zweiten Störunterdrückungseinheit angeordnet ist, um die Amplitudenkomponenten und die Phasenkomponenten des Signals, das die sich bewegende Störung am Ausgang der ersten Störunterdrückungseinheit (11, 12) repräsentiert, im Wert nahezu konstant hält, und wobei die zweite Störunterdrückungseinheit (15, 16) das Signal, das die sich bewegende Störung mit konstanter Amplitudenkomponente und Phasenkomponente repräsentiert, aus dem Ausgangssignal der Korrektureinheit (13, 14) unterdrückt.

2. Anzeigeanordnung nach Anspruch 1, dadurch gekennzeichnet, daß die erste Störunterdrückungseinheit (11, 12), die Korrektureinheit (13, 14) und die zweite Störunterdrückungseinheit (15, 16) eine Verarbeitungseinheit für die phasengleiche Komponente (I) und die Quadraturkomponente (Q) der empfangenen Radarsignale aufweist.

3. Anzeigeanordnung nach Anspruch 2, gekennzeichnet durch eine Kombinationseinheit (17) zum Kombi- nieren der phasengleichen Komponente (I) und der Quadraturkomponente (Q), die an den Ausgängen der zweiten Störunterdrückungseinheit (15, 16) anliegen.

4. Anzeigeanordnung nach Anspruch 1, dadurch gekennzeichnet, daß die Korrektoreinheit folgende Bestandteile aufweist: einen phasenkorrigierenden Datengenerator (19) zum Erzeugen eines Phasenva- riationssignals $\Delta\tilde{\Theta}$ in jeder Wiederholperiode des Radargeräts entsprechend einer mittleren Doppler-

Frequenz $\tilde{f}d$, die mit der Geschwindigkeit der sich bewegenden Störung in Beziehung steht, einen Amplituden-korrigierenden Datengenerator (20) zum Erzeugen eines amplitudenkorrigierten Datensignals $\tilde{B}$ zum Korrigieren einer Amplitudenvariation in jeder Wiederholperiode, und eine Einrichtung (21) zum Integrieren des Phasenvariationssignals $\Delta\tilde{\Theta}$ und zur Ausgabe des integrierten Signals $\Sigma\Delta\tilde{\Theta}$ als Referenzdatensignal zur Phasenkorrektur in jeder Wiederholperiode.

5. Anzeigeanordnung nach Anspruch 2, dadurch gekennzeichnet, daß die Korrektureinheit folgende Bestandteile aufweist: einen phasenkorrigierenden Datengenerator (19) zum Erzeugen eines Phasenvariationssignals $\Delta\tilde{\Theta}$ in jeder Wiederholperiode des Radargeräts entsprechend einer mittleren Doppler-Frequenz $\tilde{f}d$, die mit der Geschwindigkeit der sich bewegenden Störung in Beziehung steht, einen Amplituden-korrigierenden Datengenerator (20) zum Erzeugen eines amplitudenkorrigierten Datensignals $\tilde{B}$ zum Korrigieren einer Amplitudenvariation in jeder Wiederholperiode, und eine Integratoreinrichtung (21) zum Integrieren des Phasenvariationssignals $\Delta\tilde{\Theta}$ und Erzeugen des intergrierten Signals $\Sigma\Delta\tilde{\Theta}$, einen Sinus/Cosinus-Wandler (22) zum Erzeugen der Sinuskomponente und der Cosinuskomponente des integrierten Signals $\Sigma\Delta\tilde{\Theta}$ und einen Korrekturdatengenerator (23), der die Ausgangssignale des Sinus/Cosinus-Wandlers (22) und des Amplitudenkorrekturdatengenerators (20) in jeder Wiederholperiode empfängt und Korrekturdaten erzeugt.

6. Anzeigeanordnung nach Anspruch 4, gekennzeichnet durch einen Generator (18) zum Erzeugen und Ausgeben eines unmodifizierten Doppler-Frequenzsignals $\tilde{f}d$ entsprechend der sich bewegenden Störung innerhalb eines vorgegebenen Bereichs zu dem Phasenkorrektur-Datengenerator (19), so daß sich die Doppler-Frequenz auf einen angenäherten Wert einstellen kann.

7. Anzeigeanordnung nach Anspruch 6, dadurch gekennzeichnet, daß der Ausgang des Generators für die unmodifizierte Dopplerfrequenz mit dem Eingang des Amplitudenkorrektur-Datengenerators (20B) verbunden ist.

8. Anzeigeanordnung nach Anspruch 4 oder 5, dadurch gekennzeichnet, daß die Korrektoreinheit als Amplitudenkorrektur-Datengenerator eine Einrichtung (20A) aufweist zum Erzeugen

$$\tilde{B} = \frac{A_0}{\sin(\pi\,\tilde{f}_d\,T_j)}$$

wobei $\tilde{f}_d$ = eine mittlere Dopplerfrequenz der sich bewegenden Störung und $T_j$ = gegenwärtige Impulswiederholperiode.

9. Anzeigeanordnung nach Anspruch 1, dadurch gekennzeichnet, daß die Korrektoreinheit eine Einrichtung (19A) aufweist zum Ermitteln eines Phasendifferenzsignals (Phasenverschiebungssignals) zwischen einer Wiederholperiode und der unmittelbar davor liegenden Wiederholperiode, zum Bestimmen eines Mittelwerts der erhaltenen mehreren Phasenverschiebungen als ein mittleres Doppler-Phasenverschiebungssignal $\Delta\tilde{\Theta}$ und zum Erzeugen des Mittelwertes als eine Korrekturdatenreferenz, um die Phasenkomponenten zu korrigieren.

10. Anzeigeanordnung nach Anspruch 9, dadurch gekennzeichnet, daß die Korrektureinheit eine Einrichtung (20A) zum Erzeugen eines Amplitudenkorrekturdatensignals aufweist, um die Amplitude entsprechend dem mittleren Doppler-Phasenverschiebungssignal $\Delta\tilde{\Theta}$ zu korrigieren.

11. Anzeigeanordnung nach Anspruch 4 oder 5, dadurch gekennzeichnet, daß die Korrektureinheit folgende Bestandteile aufweist: eine Einrichtung (201B) zum Ermitteln der Ausgangsamplitudenkomponenten der ersten Störunterdrückungseinheit (11, 12), eine Einrichtung (202B) zum Ermitteln eines mittleren Amplitudenwerts $\overline{A}$ der ermittelten Amplitudenkomponenten und eine Einrichtung (203B) zum Erzeugen eines Reziprokwertes dieses Mittelwertes $A_0/\overline{A}$ als das Datensignal $\tilde{B}$, wobei $A_0$ einen Bezugsamplitudenwert kennzeichnet.

FIG.1A

FIG.1B

FIG.2

11 STATIONARY CLUTTER CANCELLER (I)

I (E COS φ)

$A_{n+m} \cdot COS\, \theta_{n+m}$

13 CORRECTOR (I)

$A_{n+m} \cdot \widetilde{B}_{n+m} \cdot COS(\theta_{n+m} - \Sigma \Delta \widetilde{\theta})$

15 MOVING CLUTTER CANCELLER (I)

17 I/Q COMBINER

12 STATIONARY CLUTTER CANCELLER (Q)

Q (E SIN φ)

$A_{n+m} \cdot SIN\, \theta_{n+m}$

CORRECTOR (Q) 14

$A_{n+m} \cdot \widetilde{B}_{n+m} \cdot SIN(\theta_{n+m} - \Sigma \Delta \widetilde{\theta})$

16 MOVING CLUTTER CANCELLER (Q)

TO DISPLAY

$\widetilde{B}_{n+m} \cdot COS(\Sigma \Delta \widetilde{\theta})$

$\widetilde{B}_{n+m} \cdot SIN(\Sigma \Delta \widetilde{\theta})$

19A $\Delta \widetilde{\theta}$ GENERATOR

$\Delta \widetilde{\theta}_{n+m}$

21 Σ

$\sum_{i=1}^{m} \Delta \widetilde{\theta}_{n+i}$

SIN & COS CONV. 22

$SIN(\Sigma \Delta \widetilde{\theta})$

$COS(\Sigma \Delta \widetilde{\theta})$

CORRECTING DATA GENERATOR 23

20A $\widetilde{B}$ GENERATOR

$\widetilde{B}_{n+m}$

FIG.3

19

EP 0 153 130 B1

$\dfrac{I}{(E \cos \phi)}$ → **STATIONARY CLUTTER CANCELLER (I)** 11

$A_{n+m} \cdot \cos \theta_{n+m}$ → **CORRECTOR (I)** 13 → $A_{n+m} \cdot \widetilde{B}_{n+m} \cdot \cos(\theta_{n+m} - \Sigma \Delta \widetilde{\theta})$ → **MOVING CLUTTER CANCELLER (I)** 15

$\dfrac{Q}{(E \sin \phi)}$ → **STATIONARY CLUTTER CANCELLER (Q)** 12

$A_{n+m} \cdot \sin \theta_{n+m}$ → **CORRECTOR (Q)** 14 → $A_{n+m} \cdot \widetilde{B}_{n+m} \cdot \sin(\theta_{n+m} - \Sigma \Delta \widetilde{\theta})$ → **MOVING CLUTTER CANCELLER (Q)** 16

**I/Q COMBINER** 17 → TO DISPLAY

$\widetilde{B}_{n+m} \cdot \cos(\Sigma \Delta \widetilde{\theta})$

$\widetilde{B}_{n+m} \cdot \sin(\Sigma \Delta \widetilde{\theta})$

19 A **$\Delta \widetilde{\theta}$ GENERATOR** → $\Delta \widetilde{\theta}_{n+m}$ → 21 **$\Sigma$** → $\displaystyle\sum_{i=1}^{m} \Delta \widetilde{\theta}_{n+i}$ → **SIN & COS CONV.** 22 → $\sin(\Sigma \Delta \widetilde{\theta})$, $\cos(\Sigma \Delta \widetilde{\theta})$ → **CORRECTING DATA GENERATOR** 23

20B
$\sqrt{I^2 + Q^2}$ 201B → **AVE.** 202B → $A_{n+m}$ → **$1/A$** 203B → $\widetilde{B}_{n+m}$

FIG.4

20